# FASCICULE DE BREVET EUROPEEN

(11) **EP 0 426 508 B1**
(45) Date de publication et mention de la délivrance du brevet: **08.12.1993**
(21) Numéro de dépôt: 90402579.8
(22) Date de dépôt: 19.09.1990
(51) Int. Cl.: B60T 8/50, B60T 8/42

(54) **Circuit hydraulique de freinage muni d'un dispositif d'antiblocage des roues pour véhicule automobile**
Hydraulischer Bremskreis ausgerüstet mit einer Radblockierschutzvorrichtung für Kraftfahrzeuge
Hydraulic brake circuit fitted with a wheel anti-lock device for vehicles

(30) Priorité: 29.09.1989 FR 8912809
(43) Date de publication de la demande: 08.05.1991
(73) Titulaire: ALLIEDSIGNAL EUROPE SERVICES TECHNIQUES, 93700 Drancy (FR)
(72) Inventeur: Pichon, Jean-Michel, Bendix Europe Serv. Techn., F-93700 Drancy (FR)
(74) Mandataire: Bentz, Jean-Paul

(56) Documents cités:
- EP-A- 0 181 156
- EP-A- 0 252 789
- DE-A- 3 538 839
- FR-A- 2 611 630
- GB-A- 2 183 763
- GB-A- 2 194 010
- GB-A- 2 199 385
- PATENT ABSTRACTS OF JAPAN, vol. 10, no. 100 (M-470)[2157], 19 avril 1986;& JP-A-60 236 859 (TOYOTA) 25-11-1985
- IDEM
- PATENT ABSTRACTS OF JAPAN, vol. 12, no. 428 (M-762)[3275], 11 novembre 1988;& JP-A-63 162 358 (NIPPON EE.B.S.) 05-07-1988

## Description

La présente invention concerne un circuit hydraulique de freinage pour un véhicule automobile équipé de roues, comprenant :
- au moins un frein de roue ;
- un maître-cylindre commandé par une pédale de frein et relié au frein de roue pour l'alimenter en liquide de freinage sous pression ;
- un générateur de pression propre à alimenter, lorsqu'il fonctionne, le frein de roue en liquide de freinage sous pression, ce générateur faisant partie d'un dispositif d'antiblocage de roue et étant commandé pour fonctionner pendant une séquence de freinage anti-bloquant ;
- des moyens de stockage du liquide de freinage ;
- un organe pour isoler automatiquement le frein de roue du maître-cylindre dès le début du fonctionnement du générateur de pression, et pour mettre le frein de roue en communication avec les moyens de stockage ; et
- des moyens de limitation de pression pour limiter la pression fournie par le générateur de pression à une valeur dépendant de la pression dans le frein de roue.

Un tel circuit est par exemple connu du document Japonais JP-A-60-236 859, qui préconise l'emploi d'une électrovalve à trois positions pour configurer le circuit hydraulique en fonction de l'apparition et du déroulement d'une séquence de freinage anti-bloquant.

Une telle électrovalve présentant un coût de fabrication élevé et entraînant des difficultés de réalisation, il est avantageux de la remplacer par une électrovalve plus simple, donc plus fiable et moins coûteuse.

Toutefois, les moyens de limitation de pression divulgués dans le document précité cessent alors d'être utilisables.

Dans ce contexte, la présente invention a pour but de proposer des moyens de limitation de pression applicables à un circuit hydraulique du type précédemment mentionné mais capable de n'utiliser qu'une électrovalve à deux positions.

A cette fin, le circuit hydraulique de l'invention est essentiellement caractérisé en ce que les moyens de limitation de pression comprennent d'une part un distributeur soumis au moins à l'influence d'une pression différentielle égale à la pression fournie par le générateur diminuée d'une seconde pression, pour faire chuter la pression du générateur lorsque cette pression différentielle dépasse un seuil déterminé, et d'autre part des moyens de mémorisation de pression reliés au frein de roue à travers une restriction montée en parallèle avec un clapet anti-retour n'autorisant un écoulement du liquide de freinage qu'en provenance du frein de roue, et reliés au distributeur pour appliquer à ce dernier, en tant que seconde pression, la pression du frein de roue telle que mémorisée.

Grâce à la mise en oeuvre de moyens simples, la pression du fluide hydraulique fournie par le générateur de pression se trouve donc ainsi limitée en fonction de la dernière pression qui existait dans le frein de roue avant la première détente, encore appelée pression d'enrayage.

Selon une caractéristique avantageuse de l'invention, le distributeur comprend un tiroir mobile entre des première et deuxième chambres de pression connectées respectivement au générateur de pression et à un dispositif de mémorisation de pression de manière que le tiroir mobile se déplace entre une première et une seconde positions sous l'effet de la pression différentielle établie entre les première et deuxième chambres pour établir la communication entre le générateur de pression et les moyens de stockage du liquide de freinage.

Ainsi le distributeur à tiroir compare à tout instant la pression d'enrayage et la pression fournie par le générateur de pression, et s'ouvre lorsque cette dernière est supérieure à la première pour relier la sortie du générateur de pression à des moyens de stockage du liquide de freinage, de sorte que la pression dans le reste du circuit de freinage ne peut plus augmenter.

De façon avantageuse, on pourra prévoir que des seconds moyens de stockage soient connectés au générateur de pression lorsque le tiroir occupe sa seconde position.

D'autres caractéristiques et avantages de la présente invention ressortiront de la description suivante d'un mode de réalisation donné à titre illustratif, mais nullement limitatif, faite en relation avec les dessins annexés, sur lesquels :
- la Figure 1 est un schéma d'un mode de réalisation du circuit de freinage selon l'invention, et
- la Figure 2 est une vue en coupe d'une partie du circuit de la Figure 1.

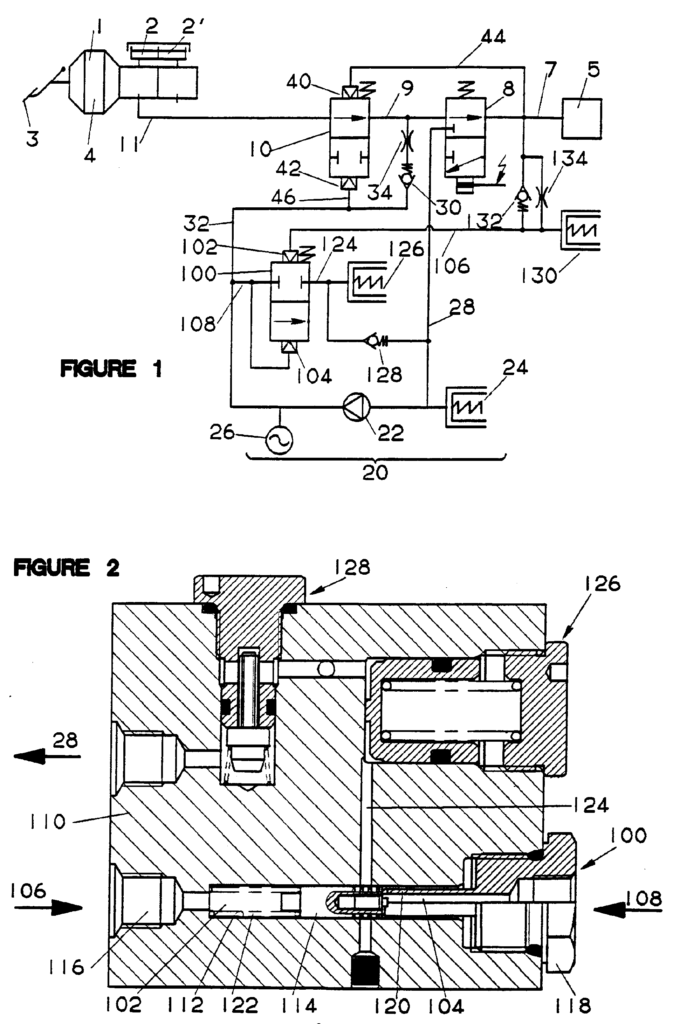

Le circuit de freinage représenté sur la Figure 1 comprend de façon classique un maître-cylindre "tandem" 1 à deux chambres de commande alimentées par des réservoirs de liquide 2, 2′ et commandé par une pédale de frein 3 par l'intermédiaire, éventuellement, d'un servofrein 4, pour alimenter au moins un frein de roue 5.

Le frein de roue 5 est raccordé par une ligne d'alimentation 7 à une électrovalve à trois voies et deux positions 8 elle-même connectée par une ligne 9 à une soupape pilotée 10, qui est à son tour connectée au maître-cylindre 1 par une ligne 11.

Ainsi, en freinage normal, le frein de roue 5 est-il commandé par le maître-cylindre à travers la soupape pilotée 10, et à travers l'électrovalve 8, placée alors dans la position représentée à la Figure où cette électrovalve établit une communication entre les lignes 7 et 9.

L'électrovalve 8 fait partie d'un dispositif d'antiblocage de roues incorporé au circuit de freinage suivant l'invention. Ce dispositif d'antiblocage comprend en outre un générateur de pression 20 qui comprend une pompe 22 éventuellement intercalée entre un réservoir à basse pression 24 et un accumulateur haute pression 26 placé à la sortie de la pompe. Le dispositif d'antiblocage commande sélectivement l'excitation de l'électrovalve 8 pour faire passer celle-ci dans sa position "détente" où elle établit une communication entre les lignes 7 et 28 de manière que le liquide contenu dans le frein de roue puisse s'écouler dans le réservoir à basse pression 24, en faisant ainsi tomber la pression dans le frein de roue. La sortie haute pression de la pompe est connectée à la ligne 9 d'alimentation de l'électrovalve 8 à travers un clapet anti-retour 30 par une ligne 32 dans laquelle est introduite une restriction 34. Le clapet anti-retour 30 se ferme lors des périodes de freinage normal et isole le circuit formé par les lignes 11, 9 et 7, et s'ouvre lors des périodes de fonctionnement du dispositif d'antiblocage. La restriction 34 est connectée à la ligne 9 qui raccorde l'électrovalve 8 à la soupape pilotée 10.

La soupape pilotée 10 comprend des première et deuxième chambres de pression 40, 42 respectivement raccordées par des lignes 44, 46 à la ligne 7 d'alimentation du frein de roue 5 et à la sortie haute pression du générateur 20 respectivement. Un tiroir est mobile dans la soupape pilotée entre les chambres 40 et 42 sous l'action de la différence des pressions régnant dans ces chambres.

Lorsque le générateur de pression 20 est mis en route par le dispositif d'antiblocage, la pression développée, toujours supérieure à celle qui règne dans les lignes d'alimentation des freins, repousse le tiroir pour interdire toute communication entre le maître-cylindre 1 et le reste du circuit de freinage.

Ainsi, pendant toute la durée du fonctionnent du dispositif d'antiblocage, le maître-cylindre 1 est isolé du reste du circuit, la pression du liquide de freinage dans le frein de roue 5 n'étant commandée que par le dispositif d'antiblocage par l'intermédiaire de l'électrovalve 8 et de la pompe 22.

Il est par conséquent souhaitable que la pression fournie par le générateur de pression soit aussi constante que possible, et soit limitée de façon à ne pas entrainer une consommation excessive de fluide hydraulique.

Pour ce faire, conformément à l'invention, il est prévu de limiter la pression du liquide de freinage fournie par le générateur de pression, de façon à faire fonctionner le dispositif d'antiblocage pendant des intervalles de temps un peu plus longs, mais sous une pression moins importante qu'avec les systèmes connus.

Comme représenté sur les Figures, un distributeur 100 est disposé dans un circuit entre la sortie du générateur de pression 20 et la ligne 7. Plus précisément, le distributeur 100 comprend des première et seconde chambres de pression 102, 104, respectivement raccordées par des lignes 106, 108, à la ligne 7 d'alimentation du frein de roue 5, et à la sortie haute pression du générateur 20, respectivement.

Comme on le voit mieux sur la Figure 2, le distributeur 100 est formé dans un corps 110 creusé d'un alésage 112 dans lequel coulisse de façon étanche un tiroir 114. Le tiroir 114 détermine dans l'alésage 112 la première chambre de pression 102, reliée par un piquage 116 à la ligne 106. L'alésage 112 reçoit de l'autre côté du tiroir 114 un bouchon-raccord 118 de liaison avec la ligne 108, le bouchon-raccord 118 étant prolongé à l'intérieur de l'alésage 112 par un manchon creux 120. L'intérieur du manchon 120 définit la seconde chambre de pression 104, le manchon 120 faisant également office de butée pour le tiroir 114, qui est soumis à l'action d'un ressort 122 dans la première chambre de pression 102.

Dans l'alésage 112 débouche un passage 124 pratiqué dans le corps 110, de façon telle que le tiroir 114 interrompe la communication entre la deuxième chambre 104 et le passage 124 lorsqu'il est dans sa position de repos illustrée sur la Figure 2, et qu'il permette cette communication lorsqu'il est poussé vers la gauche en considérant la Figure 2.

Sur la ligne 106 est connecté un dispositif 130 de mémorisation de pression, par exemple du type décrit dans EP-A-0 252 789, ainsi qu'un clapet anti-retour 132 et une restriction 134 reliés en parallèle à la ligne 7. Ce dispositif est ainsi constamment soumis à la pression régnant dans le frein de roue 5, qu'il communique à la chambre de commande 102 par la ligne 106.

Le fonctionnement du circuit de freinage selon l'invention va maintenant être décrit. En freinage normal, l'électrovalve 8, la soupape pilotée 10 et le distributeur 100 occupent chacun la position illustrée Figure 1, de sorte que le frein de roue 5 est actionné directement par le maître-cylindre 1 via la ligne 11, la soupape pilotée 10 en position passante, la ligne 9, l'électrovalve 8 en position passante et la ligne 7.

On sait qu'un dispositif d'antiblocage des roues d'un véhicule comporte des capteurs de vitesse de ces roues et un calculateur qui compare les vitesses périphériques des roues à la vitesse du véhicule pour en déduire l'imminence d'une situation de blocage d'au moins une des roues du véhicule. Le calculateur réagit alors en envoyant des ordres de commutation l'électrovalve 8 de manière à moduler la pression dans les freins de roue pour éviter d'arriver à cette situation de blocage résultant d'une action trop vive du conducteur sur la pédale de frein, compte-tenu du coefficient de frottement à l'interface roue/route, qui dépend beaucoup de l'état de la route, ainsi que du degré d'usure du pneumatique de la roue.

Dans une telle situation de blocage imminent d'une roue du véhicule, la première montée en pression s'opère comme en cas de freinage normal. Au cours de cette première montée en pression, le calculateur commande à un instant prédéterminé l'excitation de l'électrovalve associée à la roue à blocage imminent, qui passe alors dans sa position "détente", dans laquelle l'électrovalve met en communication les lignes 7 et 28 tout en coupant la communication antérieure directe entre les lignes 7 et 9. La mise en communication des lignes 7 et 28 permet au liquide de frein contenu dans le frein de roue 5 de s'écouler dans la ligne 28 pour rejoindre le réservoir basse pression 24 situé à l'entrée de la pompe 22. Il s'ensuit alors une détente de la pression dans le frein et, simultanément, une mise en route de la pompe 22, commandée par le calculateur. La pression établie par la pompe dans la ligne 46 d'alimentation de la chambre 42 de la soupape pilotée 10 étant alors supérieure à la pression dans la ligne 7, communiquée par la ligne 44 à la chambre 40 de la soupape pilotée 10, le tiroir se déplace en obturant le passage qui faisait auparavant communiquer la ligne 11 et la ligne 9 pour isoler le maître-cylindre 1 du reste du circuit de freinage.

Une séquence de freinage antibloquant comporte classiquement une suite de détentes alternées avec des remontées en pression lente. A la fin d'une détente le calculateur coupe l'excitation de l'électrovalve 8 pour établir une communication entre les lignes 7 et 32. Les freins de roue sont alors de nouveau alimentés par du liquide mis sous pression par le générateur 20 et passant dans la ligne 7 par la ligne 32, le clapet anti-retour 30, et la restriction 34, le maître-cylindre 1 restant isolé du reste du circuit de freinage car la soupape pilotée 10 obture toujours le passage entre les lignes 11 et 9, la pression dans la chambre 42 étant supérieure à celle de la chambre 40 de par la présence de la restriction 34.

Pendant les phases de détente, l'électrovalve 8 est excitée et passe dans sa position "détente" de la même manière qu'après la première montée en pression, à cette différence près que le générateur de pression 20 est déjà en fonctionnement et que dans le dispositif de mémorisation de pression 130 règne une pression égale à la dernière pression qui existait dans le frein de roue 5 juste avant la première détente, plus couramment appelée pression d'enrayage. Cette pression d'enrayage est communiquée a la chambre de commande 102 du distributeur 100 par la ligne 106. La pression dans le circuit constitué des lignes 9 et 32 va s'accroître rapidement pendant ces phases de détente, mais sera simultanément transmise à la ligne 108 et à la chambre 104. Dès que la pression dans la chambre 104 exerce sur la section du tiroir 114 une force supérieure à celle qui est exercée par la pression dans la chambre 102 égale a la pression d'enrayage augmentée de l'effort exercé par le ressort 122 sur la surface opposée du tiroir 114, celui-ci se déplace et ouvre la communication entre les lignes 108 et 124, permettant ainsi de détendre la pression excédentaire vers la capacité basse pression 24.

Dans les cas où il est préférable de ne pas surdimensionner le réservoir basse pression 24, on pourra avantageusement prévoir sur la ligne 124 une deuxième capacité basse pression 126. Afin que celle-ci soit toujours disponible pour absorber les pics de pression indésirables, on pourra, également de façon avantageuse, disposer un clapet anti-retour 128 sur la ligne 124 pour éviter que la capacité 24 ne se décharge dans la capacité 126.

Un système compact sera obtenue en intégrant plusieurs composants dans une structure monobloc telle que celle qui est représentée Figure 2 où le distributeur à tiroir 100, la capacité basse pression 126 et le clapet anti-retour 128 sont disposés dans des alésages pratiqués dans un même corps, reliés par des passages et connectés aux lignes du circuit de freinage par des piquages.

Quand, grâce à la succession de détentes intercalées avec des remontées lentes en pression obtenues grâce à la restriction 34 le calculateur du dispositif d'antiblocage détecte que le glissement entre la roue du véhicule et la route a disparu, le calculateur coupe l'excitation de la pompe 22, la pression dans la ligne 32 et la chambre 42 tombe et le tiroir de la soupape pilotée 10 revient dans la position où il dégage le passage pour établir une communication directe entre le maître-cylindre et la ligne d'alimentation 7 du frein 5 et rétablir ainsi le circuit dans sa configuration de freinage normal. La pression dans le dispositif de mémorisation de pression peut alors décroître grâce à la restriction 134, les lignes 7, 9 et 11 menant au réservoir 2 par l'intermédiaire du maître-cylindre 1 en position de repos.

Grâce au circuit de freinage selon l'invention, pendant le fonctionnement du dispositif antiblocage, la pression dans la ligne 32 est toujours supérieure à la pression dans la ligne 7 du fait de la présence de la restriction 34 située entre elles. Il s'ensuit que la pression dans la chambre de commande 42 est toujours supérieure à la pression dans la chambre 40, et que la valve pilotée 10 reste alors dans la position où elle interrompt la communication entre les lignes 9 et 11. Tout accroissement de pression dans la ligne 9, et donc dans la ligne 7 qui pourrait faire basculer la valve pilotée dans sa position passante est évité par le distributeur à tiroir 100, qui compare constamment la pression d'enrayage à la pression en sortie du générateur de pression. Toute différence entre ces pressions exercées de chaque côté du tiroir 114 susceptible de vaincre la force du ressort 122 fera se mouvoir le tiroir 114 dans le sens où il met en communication la sortie du générateur de pression 20 avec la capacité basse pression 126, elle-même pouvant à son tour se décharger dans la capacité basse pression 24.

En d'autres termes, la pression à la sortie du générateur de pression sera toujours limitée à une valeur qui dépend de la pression d'enrayage augmentée de la pression nécessaire pour vaincre l'effort exercé par le ressort 122.

Ainsi, grâce à l'invention, on a réalisé un circuit de freinage muni d'un dispositif d'antiblocage des roues, où, pendant le fonctionnement de ce dispositif, le maître-cylindre est totalement isolé du reste du circuit et où la pédale de freinage n'est sujette à aucune vibration. De plus, les pointes la pression à la sortie du générateur de pression sont absorbées par une seconde capacité basse pression, d'où il en résulte une diminution notable du niveau de bruit. Enfin, la pression délivrée par le générateur de pression est limitée à une valeur fonction de la pression d'enrayage et de la raideur du ressort 122, de sorte que la consommation de liquide de freinage se trouve limitée au strict nécessaire pour le bon fonctionnement du dispositif d'antiblocage.

Bien entendu, l'invention n'est pas limitée au mode de réalisation décrit et représenté qui n'a été donné qu'à titre d'exemple. En particulier, l'invention peut trouver aussi application à un circuit qui compterait plusieurs distributeurs à tiroir et plusieurs circuits générateurs de pression pour assurer une commande tout-à-fait indépendante des diverses roues du véhicule, au prix cependant d'une complexité accrue du véhicule.

## Revendications

1. Circuit hydraulique de freinage pour un véhicule automobile équipé de roues, comprenant :
- au moins un frein de roue (5) ;
- un maître-cylindre commandé par une pédale de frein et relié au frein de roue pour l'alimenter en liquide de freinage sous pression ;
- un générateur de pression (20) propre à alimenter, lorsqu'il fonctionne, le frein de roue en liquide de freinage sous pression, ce générateur faisant partie d'un dispositif d'antiblocage de roue et étant commandé pour fonctionner pendant une séquence de freinage anti-bloquant ;
- des moyens de stockage du liquide de freinage (24) ;
- un organe (8) pour isoler automatiquement le frein de roue (5) du maître-cylindre dès le début du fonctionnement du générateur de pression, et pour mettre le frein de roue en communication avec les moyens de stockage ; et
- des moyens (100) de limitation de pression pour limiter la pression fournie par le générateur de pression à une valeur dépendant de la pression dans le frein de roue,
caractérisé en ce que les moyens de limitation de pression comprennent d'une part un distributeur (100) soumis au moins à l'influence d'une pression différentielle égale à la pression fournie par le générateur diminuée d'une seconde pression, pour faire chuter la pression du générateur lorsque cette pression différentielle dépasse un seuil déterminé, et d'autre part des moyens de mémorisation de pression (130) reliés au frein de roue à travers une restriction (134) montée en parallèle avec un clapet anti-retour (132) n'autorisant un écoulement du liquide de freinage qu'en provenance du frein de roue, et reliés au distributeur pour appliquer à ce dernier, en tant que seconde pression, la pression du frein de roue telle que mémorisée.

2. Circuit suivant la revendication 1, caractérisé en ce que le seuil déterminé est positif.

3. Circuit selon la revendication 1 ou 2, caractérisé en ce que le distributeur (100) comprend un tiroir mobile (114) entre des première (102) et deuxième (104) chambres de pression, connectées respectivement au générateur de pression (20) et au dispositif de mémorisation de pression de manière que le tiroir mobile (114) se déplace entre une première et une seconde positions sous l'effet de la pression différentielle établie entre les première et deuxième chambres de pression pour établir la communication entre le générateur de pression et les moyens de stockage du liquide de freinage.

4. Circuit selon la revendication 3, caractérisé en ce qu'un ressort (122) placé dans la deuxième chambre de pression charge le tiroir (114) dans sa première position.

5. Circuit selon la revendication 3 ou 4, caractérisé en ce que des seconds moyens de stockage (126) du liquide de freinage sont connectés au générateur de pression (20) lorsque le tiroir est dans sa seconde position.

6. Circuit selon la revendication 5, caractérisé en ce qu'un clapet anti-retour est disposé entre les moyens de stockage et les seconds moyens de stockage pour empêcher la communication des moyens de stockage vers les seconds moyens de stockage.

## Patentansprüche

1. Hydraulischer Bremskreis für ein mit Rädern ausgestattetes Kraftfahrzeug, enthaltend:
- wenigstens eine Radbremse (5);
- einen Hauptzylinder, der durch ein Bremspedal gesteuert wird und mit der Radbremse verbunden ist, um sie mit Bremsflüssigkeit unter Druck zu versorgen;
- einen Druckgenerator (20), der geeignet ist, wenn er arbeitet, die Radbremse mit Bremsflüssigkeit unter Druck zu versorgen, wobei dieser Generator Teil einer Rad-Antiblockiereinrichtung ist und so gesteuert wird, daß er während einer Antiblockier-Bremssequenz arbeitet;
- Vorratsmittel für die Bremsflüssigkeit (24);
- ein Organ (8), um vom Beginn des Arbeitens des Druckgenerators an die Radbremse (5) automatisch von dem Hauptzylinder abzutrennen, und um die Radbremse in Verbindung mit den Vorratsmitteln zu bringen; und
- Druckbegrenzungsmittel (100) zur Begrenzung des von dem Druckgenerator gelieferten Drucks auf einen Wert, der von dem Druck in der Radbremse abhängt,
dadurch gekennzeichnet, daß die Druckbegrenzungsmittel einerseits einen Verteiler (100) enthalten, der wenigstens dem Einfluß eines Differenzdrucks ausgesetzt ist, der gleich dem vom Generator gelieferten Druck, vermindert um einen zweiten Druck ist, um den Druck des Generators abfallen zu lassen, wenn dieser Differenzdruck einen vorbestimmten Schwellenwert übersteigt, und andrerseits Druckspeichermittel (130), die mit der Radbremse über eine Drosselstelle (134) verbunden sind, die parallel zu einem Rückschlagventil (132) angeordnet ist, das nur eine von der Radbremse kommende Strömung der Bremsflüssigkeit zuläßt, und mit dem Verteiler verbunden sind, um diesem den gespeicherten Druck der Radbremse als zweiten Druck zuzuführen.

2. Kreis nach Anspruch 1, dadurch gekennzeichnet, daß der vorbestimmte Schwellenwert positiv ist.

3. Kreis nach Anspruch 1 oder 2, dadurch gekennzeichnet, daß der Verteiler (100) einen beweglichen Schieber (114) zwischen einer ersten Druckkammer (102) und einer zweiten Druckkammer (104) enthält, die mit dem Druckgenerator (20) bzw. mit der Druckspeichereinrichtung verbunden sind, derart, daß sich der bewegliche Schieber (114) unter der Wirkung des zwischen der ersten und der zweiten Druckkammer ausgebildeten Differenzdrucks zwischen einer ersten und einer zweiten Stellung verschiebt, um die Verbindung zwischen dem Druckgenerator und den Vorratsmitteln für die Druckflüssigkeit herzustellen.

4. Kreis nach Anspruch 3, dadurch gekennzeichnet, daß eine in der zweiten Druckkammer angebrachte Feder (122) den Schieber (114) in seine erste Stellung belastet.

5. Kreis nach Anspruch 3 oder 4, dadurch gekennzeichnet, daß zweite Vorratsmittel (126) für die Bremsflüssigkeit mit dem Druckgenerator (20) verbunden sind, wenn sich der Schieber in seiner zweiten Stellung befindet.

6. Kreis nach Anspruch 5, dadurch gekennzeichnet, daß zwischen den Vorratsmitteln und den zweiten Vorratsmitteln ein Rückschlagventil angeordnet ist, um die Verbindung von den Vorratsmitteln zu den zweiten Vorratsmitteln zu verhindern.

## Claims

1. Hydraulic braking circuit for a motor vehicle equipped with wheels, comprising:
- at least one wheel brake (5);
- a master brake cylinder controlled by a brake pedal and connected to the wheel brake in order to supply it with pressurized brake fluid;
- a pressure generator (20) suitable for supplying, when it operates, the wheel brake with pressurized brake fluid, this generator forming part of a wheel-antilock device and being controlled in order to operate during an antilock-braking sequence;
- means (24) for storing the brake fluid;
- a member (8) for automatically isolating the wheel brake (5) of the master brake cylinder as soon as the pressure generator operates, and for bringing the wheel brake into communication with the storage means; and
- pressure-limiting means (100) for limiting the pressure supplied by the pressure generator to a value dependent on the pressure in the wheel brake,
characterized in that the pressure-limiting means comprise, on the one hand, a distributor (100) subjected at least to the influence of a differential pressure equal to the pressure supplied by the generator reduced by a second pressure, in order for the pressure of the generator to fall when this differential pressure exceeds a predetermined threshold and, on the other hand, pressure-memorization means (130) which are connected to the wheel brake through a restriction (134) mounted in parallel with a non-return flap (132) allowing only a flow of the brake fluid coming from the wheel brake, and which are connected to the distributor in order to apply to the latter, as second pressure, the wheel-brake pressure as memorized.

2. Circuit according to Claim 1, characterized in that the predetermined threshold is positive.

3. Circuit according to Claim 1 or 2, characterized in that the distributor (100) comprises a slide (114) which can move between first (102) and second (104) pressure chambers which are connected to the pressure generator (20) and to the pressure-memorization device respectively so that the movable slide (114) is displaced between a first and second position under the influence of the differential pressure established between the first and second pressure chambers in order to establish the communication between the pressure generator and the means for storing the brake fluid.

4. Circuit according to Claim 3, characterized in that a spring (122) placed in the second pressure chamber loads the slide (114) in its first position.

5. Circuit according to Claim 3 or 4, characterized in that second means (126) for storing the brake fluid are connected to the pressure generator (20) when the slide is in its second position.

6. Circuit according to Claim 5, characterized in that a non-return flap is arranged between the storing means and the second storing means to prevent communication of the storing means with the second storing means.
